## Europäisches Patentamt

## European Patent Office

## Office européen des brevets

(19)

(11) Veröffentlichungsnummer: **0 244 588**
**B1**

(12) **EUROPÄISCHE PATENTSCHRIFT**

(45) Veröffentlichungstag der Patentschrift: **23.01.91**

(51) Int. Cl.⁵: **C 13 F 1/00,** C 13 G 1/00, B 01 D 9/00

(21) Anmeldenummer: **87103208.2**

(22) Anmeldetag: **06.03.87**

(54) **Kristallisationsbehälter für die kontinuierliche Kristallisation von übersättigten Lösungen.**

(30) Priorität: **03.05.86 DE 3615095**

(43) Veröffentlichungstag der Anmeldung:
**11.11.87 Patentblatt 87/46**

(45) Bekanntmachung des Hinweises auf die
Patenterteilung:
**23.01.91 Patentblatt 91/04**

(84) Benannte Vertragsstaaten:
**BE DE FR GB IT NL**

(56) Entgegenhaltungen:
**EP-A-0 065 775**
**GB-A-1 141 639**

(73) Patentinhaber: **Braunschweigische
Maschinenbauanstalt AG
Am Alten Bahnhof 5
D-3300 Braunschweig (DE)**

(72) Erfinder: **Austmeyer, Klaus, Dr. Ing.
Im Kirchwinkel 1a
D-3304 Wendeburg (DE)**
Erfinder: **Reinefeld, Erich, Prof. Dr.
Roseggerweg 18
D-3340 Wolfenbüttel (DE)**
Erfinder: **Nitsche, Wilhelm, Ing. grad.
Lindenbergstrasse 19
D-3300 Braunschweig (DE)**
Erfinder: **Tschersich, Jürgen, Dr. Ing.
Am Felsenkeller 38
D-3320 Salzgitter 51 (DE)**

(74) Vertreter: **Döring, Rudolf, Dr.-Ing.
Patentanwälte Dr.-Ing. R. Döring Dipl.-Phys. Dr.
J. Fricke Jasperallee 1a
D-3300 Braunschweig (DE)**

**Beschreibung**

Die Erfindung betrifft einen Kristallisationsbehälter für die kontinuierliche Kristallisation von übersättigten Lösungen, insbesondere für die Verdampfungskristallisation von übersättigten Zuckerlösungen, mit Einbauteilen wie Leitrohren, Strömungsleit- und -brechblechen, Tuben für Meßeinrichtungen und ggf. Rühren oder dgl.

Es sind Kristallisationsbehälter, insbesondere für übersättigte Zuckerlösungen, bekannt, die bei der Verwendung für die Verdampfungskristallisation mit einer im Behälterinneren befindlichen Heizeinrichtung ausgerüstet sind, welche ein zentrisches Strömungsrohr umschließt und die mit den obengenannten Einbauteilen ausgerüstet sind (EP—A—00 65 775).

Bei derartigen für die kontinuierliche Kristallisation vorgesehenen Kristallisationsbehältern, jedoch auch bei solchen, die für die Kühlkristallisation verwendet werden, lassen sich zumindest örtliche Inkrustationen während des Kristallisationsprozesses nicht vermeiden. Der Umfang der Inkrustationen und die Zeit der Entstehung dieser Inkrustationen bestimmen die jeweilige Betriebsdauer des Kristallisationsbehälters innerhalb einer Anlage zur kontinuierlichen Kristallisation. Um bei der kontinuierlichen Kristallisation wirtschaftlich arbeiten zu können, ist es erforderlich, daß die Kristallisationsbehälter möglichst lange Zeitspannen in Betrieb gehalten werden, ehe durch Unterbrechung des Kristallisationsvorganges bzw. durch Herausnehmen des einzelnen Behälters bei der Anordnung mehrerer Kristallisationsbehälter innerhalb einer Anlage die Inkrustationen beseitigt werden.

Bei der diskontinuierlichen Kristallisation treten zwar auch die Probleme der Inkrustation auf, jedoch sind sie dabei nicht so störend, weil der Kristallisationsbehälter nach jeder Charge von den während der relativ geringen vorherigen Betriebsdauer entstandenen Inkrustationen befreit werden kann.

In der Praxis wurde festgehalten, daß Inkrustationen insbesondere im Bereich der Behälterböden sowie-seitenwandungen und an den Behältereinbauten der eingangs genannten Art auftreten, ohne daß die Ursachen hierfür im einzelnen bekannt sind. Beobachtungen haben lediglich gezeigt, daß Einbauteile, welche Kältebrücken bilden, in der Regel eher zur Inkrustation neigen, als Einbauteile oder Wandungen, die gegenüber den übrigen Teilen oder Wandungen eine höhere Temperatur aufweisen.

Der Erfindung liegt die Aufgabe zugrunde, einen Kristallisationsbehälter der einleitend genannten Art so auszubilden, daß die Inkrustationen vermindert und die Betriebsdauer wesentlich erhöht sowie die für die Beseitigung der Inkrustationen notwendigen Zeitspannen wesentlich verkürzt werden können.

Die Lösung vorstehender Aufgabe besteht darin, daß zur örtlichen Vermeidung oder Verminderung sowie zur Beseitigung von Inkrustationen die innere Seiten- und/oder Bodenwand des Behälters und/oder die Einbauteile wenigstens im Bereich derjenigen Zonen, die besonders zur Bildung anhaftender Inkrustationen neigen, ganz oder teilweise mit einer federnd nachgiebigen Abdeckung oder Ummantelung ausgerüstet sind.

Der Erfindung liegt der Gedanke zugrunde, daß man nach heutiger Kenntnis nicht durch die Werkstoffwahl das Anlagern bzw. Anhaften von Kristallen an den Werkstoffoberflächen vermeiden kann, jedoch durch einen sich während des Betriebes ändernde Oberflächenverlauf ein dauerhafter Aufbau der Kristalle verhindert wird. Mit federnd nachgiebigen Abdeckungen oder Ummantelungen ist dies erreichbar, wenn dynamische Kräfte auf diese Abdeckungen oder Ummantelungen einwirken.

Die dynamischen Kräfte zur Erzeugung von Bewegungen der vorgesehenen federnd nachgiebigen Abdeckungen oder Ummantelungen entstehen dabei im Falle von Kristallisationsbehältern für die Verdampfungskristallisation durch das Dampfblasensieden sowie auch durch Impulsstöße aus dem sich bewegenden Medium infolge mechanischer Umwälzung oder aber durch Einwirkung äußerer Einflüsse, z.B. durch vorübergehende Druckänderungen in dem Kristallisationsbehälter. Bis auf das Dampfblasensieden können die anderen mechanischen Einwirkungen auch bei Kristallisationsbehältern für die Kühlkristallisation Anwendung finden.

Die Abdeckungen oder Ummantelungen müssen hinsichtlich des verwendeten Materials so ausgewählt sein, daß die Oberfläche des Materials oder das Material selbst sich flexibel in gewissen Grenzen verformen kann, d.h. Walkarbeit leistet.

Die Abdeckungen bzw. Ummantelungen können dabei aus einem biegsamen, nachgiebigen, blattförmigen Kunststoff bestehen, wobei sich der unter dem Warenzeichen "Teflon" bekannte Kunststoff bei Versuchen besonders bewährt hat.

Es ist jedoch auch möglich, Abdeckungen bzw. Ummantelungen vorzusehen, die aus blattförmigen Blech, wie Edelstahlblech, bestehen, wenn dafür gesorgt wird, daß derartige blattförmige Abdeckungen Bewegungen nach Art einer mechanischen Membran durchführen können und zu diesen Bewegungen durch einen entsprechenden Energieeintrag mit Hilfe der obengenannten Maßnahmen veranlaßt werden.

Besonders günstig ist es aus dem vorgenannten Grunde, wenn die blattförmigen Abdeckungen oder Ummantelungen lose auf dem Abdeck- bzw. Ummantelungsbereich aufgelegt und lediglich entlang im Abstand angeordneter Streifen, insbesondere längs ihrer Randzonen mit dem Abdeck- bzw. Ummantelungsbereich fest verbunden sind.

In der Regel reicht die lose Auflage und Befestigung der Abdeckungen bzw. Ummantelungen an den Behälterwandungen bzw. den Einbauteilen aus, um das gewünschte Bewegungsspiel zur Verformung der Abdeckungen zu erreichen. Diese Wirkung läßt sich jedoch verstärken, wenn die blattförmigen Abdeckungen bzw. Ummantelungen unter Belassung eines Luftpolsters mit dem Abdeck- bzw. Ummantelungsbereich verbunden sind.

Zur Erzielung dieses Luftpolsters ist es selbstverständlich erforderlich, daß die Abdeckung bzw. Ummantelung im Randbereich dicht mit den abgedeckten Zonen der Behälter- bzw. Bodenwandung bzw. des Einbauteils verbunden wird, wobei die Verbindung je nach Art des Werkstoffes für die Abdeckung durch Kleben, Schweißen, Nieten, Schrauben oder auch Löten erfolgen kann.

Bei der Anordnung eines Luftpolsters zwischen der Abdeckung und den Wandungs- bzw. Bodenbereichen des Behälters kann der Luftpolsterraum zusätzlich mit äußeren Einrichtungen zur Erzeugung von Druckimpulsen verbunden sein.

Soweit Ummantelungen vorgesehen sind, ist es zweckmäßig, diese als taschenförmige Ummantelungen auszubilden, welche die abzudeckenden Einbauteile, wie Rührwerksflügel, Leit- und Strombrecherbleche oder Tuben für Meßeinrichtungen und dgl. mit Spiel umschließen und nur längs des Öffnungsrandes mit den umschlossenen Teilen verbunden sind.

In ähnlicher Weise kann auch die Rührwerkswelle mit einer manschettenförmigen Umhüllung ausgerüstet sein, die lediglich im Bereich ihrer axialen Enden umfänglich auf der Rührwerkswelle gehalten ist.

Statt der bisher beschriebenen Abdeckungen oder Ummantelungen, welche im Bereich zwischen ihren jeweiligen Befestigungsstellen Bewegungen nach Art einer mechanischen Membran ausführen, kann die Abdeckung oder Ummantelung gemäß einer weiteren Variante der Erfindung auch aus einem flüssigkeitsdichten gummielastischen Schichtwerkstoff bestehen, welcher in Richtung quer zu seiner Schichtebene federnd elastisch ist, so daß durch örtliche Druckdifferenzen, beispielsweise beim Dampfblasensieden, eine Oberflächenbewegung der Abdeckung auftritt, die ein dauerhaftes Anlagern der Kristalle an der Oberfläche verhindert.

Der gummielastische Schichtwerkstoff kann dabei ein gummiartiger Werkstoff sein, welcher hinreichend wärmebeständig ist und bei der Kristallisation von Zuckerlösungen auch lebensmittelrechtlich zulässig ist. Ein eine Schaumstruktur aufweisender Schichtwerkstoff mit einer flüssigkeitsdichten Oberfläche wäre dabei besonders günstig.

Der gummielastische Schichtwerkstoff kann dabei ebenso wie die obenbeschriebenen anderen Abdeckungen nur stellenweise, insbesondere im Randbereich, an der Behälterwand bzw. dem Behälterboden oder den Einbauteilen befestigt sein, jedoch erscheint es günstiger, wenn dieser gummielastische Schichtwerkstoff flächig auf dem abzudeckenden Bereich befestigt ist.

Es ist ohne weiteres denkbar, daß der gummielastische Schichtwerkstoff auch als angeschäumte Schicht auf die abzudeckenden Bereiche aufgebracht wird.

## Patentansprüche

1. Kristallisationsbehälter für die kontinuierliche Kristallisation von übersättigten Lösungen, insbesondere für die Verdampfungskristallisation von übersättigten Zuckerlösungen, mit Einbauteilen, wie Leitrohren, Strömungsleit- und -brechblechen, Tuben für Meßeinrichtungen und gegebenenfalls Rührern oder dgl., dadurch gekennzeichnet, daß zur örtlichen Vermeidung oder Verminderung sowie zur Beseitigung von Inkrustationen die innere Seiten- und/oder Bondenwand des Behälters und/oder die Einbauteile wenigstens im Bereich derjenigen Zonen, die besonders zur Bildung anhaftender Inkrustationen neigen, ganz oder teilweise mit einer federnd nachgiebigen Abdeckung oder Ummantelung ausgerüstet sind.

2. Kristallisationsbehälter nach Anspruch 1, dadurch gekennzeichnet, daß die Abdeckungen oder Ummantelungen aus biegsam nachgiebigem blattförmigem Kunststoff bestehen.

3. Kristallisationsbehälter nach Anspruch 2, dadurch gekennzeichnet, daß die Abdeckungen aus einem unter dem Warenzeichen "Teflon" bekannten blattförmigem Kunststoff bestehen.

4. Kunststoffbehälter nach Anspruch 1, dadurch gekennzeichnet daß die Abdeckungen oder Ummantelungen aus blattförmigem Blech, wie Edelstahlblech, bestehen.

5. Kristallisationsbehälter nach einem der Ansprüche 1 bis 4, dadurch gekennzeichnet, daß die Abdeckungen oder Ummantelungen aus blattförmigem Werkstoff lose auf die Abdeck- bzw. Ummantelungsbereiche aufgelegt und lediglpch entlang im Abstand angeordneter Streifen, insbesondere längs ihrer Randzonen mit dem Abdeck- bzw. Ummantelungsbereich fest verbunden sind.

6. Kristallisationsbehälter nach Anspruch 5, dadurch gekennzeichnet, daß die Abdeckungen oder Ummantelungen aus blattförmigem Material unter Belassung eines Luftpolsters mit dem Abdeck- bzw. Ummantelungsbereich verbunden sind.

7. Kristallisationsbehälter nach Anspruch 6, dadurch gekennzeichnet, daß der zwischen der Abdeckung aus blattförmigem Werkstoff und dem Abdeckbereich vorgesehene Luftpolsterraum zusätzlich mit äußeren Einrichtungen zur Erzeugung von Druckimpulsen verbunden ist.

8. Kristallisationsbehälter nach einem der vorhergehenden Ansprüche, dadurch gekennzeichnet, daß bei Anordnung von Ummantelungen diese taschenförmig ausgebildet sind und die abzudeckenden Einbauteile, wie Rührwerksflügel, Leit- und Strombrecherbleche oder Tuben für Meßeinrichtungen und dgl. mit Spiel umschließen und nur längs des Öffnungsrandes mit den umschlossenen Teilen verbunden sind.

9. Kristallisationsbehälter nach Anspruch 1, dadurch gekennzeichnet, daß die Abdeckungen oder Ummantelungen aus einem flüssigkeitsdichten, gummielastischen Schichtwerkstoff bestehen, welcher in Richtung quer zu seiner Schichtebene federnd elastisch ist.

10. Kristallisationsbehälter nach Anspruch 9, dadurch gekennzeichnet, daß der gummielastische Schichtwerkstoff flächig auf dem Abdeck- bzw. Ummantelungsbereich befestigt ist.

## Revendications

1. Récipient de cristallisation pour la cristallisation en continu de solutions sursaturées, en particulier pour la cristallisation par évaporation de solutions de sucre sursaturées, avec des éléments incorporés, tels que des tubes de guidage, des tôles de guidage d'écoulement et des tôles de fractionnement d'écoulement, des tubes pour dispositifs de mesure, et, le cas échéant, des agitateurs ou moyens analogues, caractérisé en ce que, pour éviter ou diminuer localement les incrustations, ainsi que pour les éliminer, la paroi intérieure latérale et/ou de fond du récipient et/ou les éléments incorporés situés au moins dans la région des zones qui tendent particulièrement à former des incrustations adhérentes sont équipés, entièrement ou partiellement, d'un recouvrement ou d'un enveloppement déformable élastiquement.

2. Récipient de cristallisation selon la revendication 1, caractérisé en ce que les recouvrements ou enveloppements se composent de matière plastique sous forme de feuille, déformable de façon flexible.

3. Récipient de cristallisation selon la revendication 2, caractérisé en ce que les recouvrements se composent d'une matière plastique sous forme de feuille, connue sous la dénomination commerciale "Teflon".

4. Récipient de cristallisation selon la revendication 1, caractérisé en ce que les recouvrements ou enveloppements se composent de tôle sous forme de feuille, tel que de la tôle d'acier allié.

5. Récipient de cristallisation selon l'une des revendications 1 à 4, caractérisé en ce que les recouvrements ou enveloppements en matériau sous forme de feuille sont appliqués de façon lâche sur les régions de recouvrement ou d'enveloppement et sont uniquement reliées fermement à la région de recouvrement ou d'enveloppement le long de bandes espacées, en particulier le long de leurs zones de bordure.

6. Récipient de cristallisation selon la revendication 5, caractérisé en ce que les recouvrements ou enveloppements en matériau en forme de feuille sont reliés à la région de recouvrement ou d'enveloppement, en laissant subsister un coussin d'air.

7. Récipient de cristallisation selon la revendication 6, caractérisé en ce que l'espace de coussin d'air qui est prévu entre le recouvrement en matériau en forme de feuille et la région de recouvrement est de plus relié à des dispositifs extérieurs en vue de produire des impulsions de pression.

8. Récipient de cristallisation selon l'une des revendications précédentes, caractérisé en ce que, dans le cas de disposition d'enveloppements, ceux-ci sont réalisés sous forme de poches et entourent avec un jeu les éléments incorporés à recouvrir, telles que les ailettes d'agitateur, les tôles de guidage et de fractionnement d'écoulement, ou les tubes pour les dispositifs de mesure et analogues, et ne sont reliées aux parties entourées que le long de la bordure de l'ouverture.

9. Récipient de cristallisation selon la revendication 1, caractérisé en ce que les recouvrements ou enveloppements se composent d'un matériau en couche étanche aux liquides, présentant l'élasticité du caoutchouc, qui présente l'élasticité d'un ressort dans la direction transversale à son plan de couche.

10. Récipient de cristallisation selon la revendication 9, caractérisé en ce que le matériau à couche qui présente l'élasticité du caoutchouc est fixé à plat sur la région de recouvrement ou d'enveloppement.

## Claims

1. A crystallisation container for the continuous crystallisation of supersaturated solutions, in particular for the evaporative crystallisation of supersaturated sugar solutions, with built-in parts, such as conducting tubes, metal sheets for guiding and breaking the flow, tubes for measuring devices and if applicable stirrers or the like, characterised in that, for the local avoidance or reduction and for the removal of incrustations, the inner side wall and/or base wall of the container and/or the built-in parts are entirely or partially equipped with a resiliently yielding covering or jacket, at least in the region of those zones which are particularly prone to the formation of adhering incrustations.

2. A crystallisation container according to Claim 1, characterised in that the coverings or jackets consist of flexibly yielding sheet-shaped synthetic material.

3. A crystallisation container according to Claim 2, characterised in that the coverings consist of a sheet-shaped synthetic material known under the trade mark "Teflon".

4. A synthetic-material container according to Claim 1, characterised in that the coverings or jackets consist of sheet-shaped sheet material, such as high-grade steel sheet.

5. A crystallisation container according to any one of Claims 1 to 4, characterised in that the coverings or jackets made of sheet-shaped material are applied loosely to the covering or jacket regions and are only connected firmly to the covering or jacket region along strips which are arranged apart, in particular along their edge areas.

6. A crystallisation container according to Claim 5, characterised in that the coverings or jackets made of sheet-shaped material are connected to the covering or jacket region, leaving an air cushion.

7. A crystallisation container according to Claim 6, characterised in that the air cushion spaced provided between the covering made of sheet-shaped material and the covering region is additionally connected with outer devices for generating pressure impulses.

8. A crystallisation container according to any one of the preceding Claims, characterised in that, when it is jackets which are arranged, they are constructed in the shape of pockets and they surround with play the built-in parts to be covered, such as stirrer blades, metal sheets for guiding and breaking the flow, or tubes for measuring devices, and the like, and are only connected with the surrounded parts along the edge of the opening.

9. A crystallisation container according to Claim 1, characterised in that the coverings or jackets consist of a fluid-tight, rubber-elastic laminar material which is resiliently elastic in a direction cross-wise to its plane of stratification.

10. A crystallisation container according to Claim 9, characterised in that the rubber-elastic laminar material is fastened in an areal manner to the covering and jacket region.